# EUROPÄISCHE PATENTANMELDUNG

(11) **EP 0 570 987 A1**
(43) Veröffentlichungstag der Anmeldung: **24.11.1993**
(21) Anmeldenummer: 93108305.9
(22) Anmeldetag: 21.05.1993
(51) Int. Cl.: B62J 6/04, B60Q 1/26

(54) **Fahrrad-Rückleuchte**

(30) Priorität: 20.05.1992 DE 9206859 U
(71) Anmelder: Franz, Heinz-Günther, D-22359 Hamburg (DE); Landman, Wietze ., NL-3881 GG Putten (Gld.) (NL); Saber, Maurice Ali Reza, NL-1273 XC Huizen (NH.) (NL)
(72) Erfinder: Franz, Heinz-Günther, D-22359 Hamburg (DE); Landman, Wietze ., NL-3881 GG Putten (Gld.) (NL); Saber, Maurice Ali Reza, NL-1273 XC Huizen (NH.) (NL)
(74) Vertreter: Dipl.-Ing. H. Hauck, Dipl.-Ing. E. Graalfs, Dipl.-Ing. W. Wehnert, Dr.-Ing. W. Döring, Dr.-Ing. N. Siemons

(57) **Zusammenfassung**

Fahrrad-Rückleuchte, mit einem Leuchtengehäuse (19), einem darin angeordneten Reflektor (11) und einer dem Reflektor zugeordneten Lampe, wobei die Lampe mindestens einen LED-Halbleiterchip (9) als Leuchtelement und einen Träger (7) für den LED-Halbleiterchip aufweist und der Träger (7) im Leuchtengehäuse (19) mit etwa im Brennpunkt des Reflektors (11) angeordnetem LED-Halbleiterchip befestigt ist.

## Beschreibung

Gegenstand der Erfindung ist eine Fahrrad-Rückleuchte nach dem Oberbegriff des Anspruches 1.

Bei herkömmlichen Fahrrad-Rückleuchten der eingangs genannten Art ist die Lampe eine Glühlampe mit einem gewendelten Leuchtdraht als Leuchtelement. Der Leuchtdraht ist etwa im Zentrum des Glaskolbens an Elektroden bzw. einem Fortsatz des Trägers aufgehängt, der die darin eingegossenen Elektroden zu Sockel- und Bodenkontakt führt. Der Glaskolben ist evakuiert oder mit einem Gas gefüllt. Der Sockel kann als Schraubsockel oder zylindrisch mit seitlichen Ansätzen für eine Bajonettaufnahme ausgelegt sein.

Derartige Fahrrad-Leuchten sind bei Benutzung einer erheblichen Beschädigungsgefahr durch Vibrationen und stoßartige Beanspruchungen ausgesetzt, welche die Glühwendel, den Träger, die Elektroden bzw. den Glaskolben einschließlich seiner Befestigung am Lampensockel beschädigen können. Auch die stark schwankende Energiezufuhr durch Dynamo-Versorgung sowie die stark veränderlichen klimatischen Bedingungen tragen dazu bei, daß derartige Fahrradlampen regelmäßig nur eine kurze Lebensdauer haben. Überdies ist ihre Lichtausbeute nicht besonders groß, d.h. ein erheblicher Teil der zugeführten Energie wird in Wärme umgesetzt, die wiederum die Lebensdauer der Lampe verkürzt. Die ungünstige Lichtausbeute ist besonders dann von Nachteil, wenn ein Dynamo vermieden oder ein Standlicht realisiert werden soll, wozu eine Versorgung der Lampe zumindest bei Fahrrad-Stillstand aus einem Akkumulator erforderlich ist.

Es sind bereits Fahrrad-Rückleuchten bekannt geworden, die eine vorzugsweise rote Leuchtdiode eingesetzt haben. Die Leuchtdiode ist relativ unempfindlich und weist eine hohe Lichtausbeute auf. Für die LED bedarf es allerdings besonderer Halterungen oder Löt-Befestigungen, wodurch Installation oder Nachrüsten einer herkömmlichen Rückleuchte erschwert sind. Zudem sind für den Betrieb einer LED noch weitere Schaltungselemente, wie Dioden, Widerstände, Spannungsregler erwünscht, die ebenfalls untergebracht werden müssen und die Ausrüstung einer Fahrradleuchte mit einer LED erschweren. Es kommt hinzu, daß eine LED einen stark gerichteten Lichtstrahl hat, so daß eine solchermaßen ausgerichtete Rückleuchte von einem etwa auf der Rückleuchten-Mittelachse befindlichen Beobachter zwar gut wahrgenommen, von einer seitlich angeordneten Person jedoch übersehen werden kann.

Davon ausgehend liegt der Erfindung die Aufgabe zugrunde, eine verbesserte Fahrrad-Rückleuchte zu schaffen, die unempfindlich ist und besser wahrgenommen werden kann.

Die Lösung dieser Aufgabe ist im Anspruch 1 angegeben. Vorteilhafte Ausgestaltungen sind in den Unteransprüchen enthalten.

Bei einer erfindungsgemäßen Rückleuchte ist anstatt der herkömmlichen Glühlampe ein Träger mit mindestens einem Leuchtdioden-(LED-)Halbleiterchip vorgesehen. Diese Lampe ist in herkömmlicher Weise durch einfache Sockelbefestigung oder sonstige Befestigung im Leuchtengehäuse installier- und nachrüstbar und weist die hohe Lichtausbeute und Funktionssicherheit einer LED auf. Als Störfaktor entfällt eine Beschädigung des Glaskolbens, weil die solchermaßen ausgebildete Lampe keines Vakuums oder einer Gasfüllung bedarf. Für den Träger kommt eine Leiterplatte aus bruchunempfindlichem Material in Betracht, die zugleich Träger von Schaltungselementen sein kann. Besonders vorteilhaft ist, daß der LED-Halbleiterchip im Gegensatz zu einer herkömmlichen Leuchtdiode eine allseitige Lichtabstrahlung hat und im Brennpunkt des Reflektors angeordnet ist. Die Abstrahlung ist lediglich durch die Befestigung des Chips auf dem Träger eingeschränkt, der allerdings auch aus transparentem Werkstoff bestehen kann. Mit nur einem LED-Halbleiterchip wird somit eine gegenüber herkömmlichen LED deutlich verbesserte Abstrahlcharakteristik erzielt, die wegen der Anordnung im Reflektor-Brennpunkt derjenigen einer Glühlampe entspricht. Zusammen mit der einfachen und von einem Laien durchführbaren Installierbarkeit der Leuchte macht dies die LED-Technik für den Fahrradeinsatz erst praktikabel. Darüber hinaus ist die Lampe insbesondere auf Gebieten einsetzbar, bei denen ähnliche Beanspruchungen und Anforderungen herrschen.

Aus fertigungstechnischen Gründen kann der LED-Halbleiterchip an einem Zwischenträger insbesondere aus Keramik befestigt sein, der seinerseits am Träger befestigt ist. Bevorzugt ist der Zwischenträger hierbei an die Leiterbahn des Trägers gelötet. Der LED-Halbleiterchip wird bevorzugt durch Bonden befestigt, entweder unmittelbar an den Leiterbahnen oder an einem Zwischenträger.

Zum Schutz kann jeder LED-Halbleiterchip mit einem transparenten Schutzverguß bedeckt sein, der zudem seine Kontaktierung und Befestigung am Träger unterstützen kann.

Eine weitere Annäherung an eine herkömmliche Glühlampe wird erzielt, wenn der LED-Halbleiterchip im Ort eines Leuchtdrahtes einer standardisierten Glühlampe mit übereinstimmendem Lampensockel angeordnet ist. Da der Strahlengang von Rückleuchten-Reflektoren an standardisierte Glühlampen angepaßt ist, begünstigt dies deren Verwendung in einer erfindungsgemäßen Leuchte.

Aus demselben Grunde können mehrere LED-Halbleiterchips Positionen eines gewendelten Leuchtdrahtes besetzen. Dies gilt vor allem in einer Ebene senkrecht zur Lampenachse, aus der die Lampe in Axialrichtung abstrahlt. Ohnehin begünstigen mehrere LED-Halbleiterchips, auch wenn sie nicht diese bevorzugten Positionen einnehmen, die Betriebssicherheit, weil auch bei Ausfall einzelner parallel betriebener Chips die Funktion der Lampe insgesamt gewährleistet sein kann. Insbesondere für die Nachbildung der Glühwendel können mehrere LED-Halbleiterchips an verschiedenen Seiten der Leiterplatte angeordnet sein.

Die Nachbildung einer Glühwendel durch einzelne LED-Halbleiterchips erfolgt annähernd punktweise. Hierzu können mehrere LED-Halbleiterchips an verschiedenen Positionen der Leiterplatte entlang einer Wendellänge angeordnet sein. Auf verschiedenen Seiten der Leiterplatte benachbarte Chips können die Länge einer halben Wendel aufweisen.

Der Träger mit dem Chip kann an einem herkömmlichen Lampensockel befestigt sein. Ein herkömmlicher Glaskolben ist nicht unbedingt erforderlich. Aus Gründen der Handhabbarkeit, insbesondere zur Erleichterung ihres Einsetzens in einen Lampensockel, kann sie jedoch einen Glaskolben haben, wobei der LED-Halbleiterchip am Träger in den Kolben hineinragt. Der Glaskolben hat außerdem eine Schutzfunktion und verleiht der Lampe ein Äußeres, die dem einer herkömmlichen Glühlampe sehr nahe kommt.

Insbesondere für eine optimale Ausrichtung der Lampe auf den Reflektor und deren vereinfachtes Einsetzen, kann ein Bajonettsockel als Lampensockel zweckdienlich sein. In jedem Falle kann ein Sockel weitere Schaltungselemente aufweisen, die für den Betrieb der LED gewünscht sind, wie z.B. integrierte Schaltungen.

Statt mittels eines Lampensockels kann der Träger auch unmittelbar im Lampengehäuse befestigt sein. Für eine korrekte Ausrichtung des LED-Chips zum Reflektor ist die unmittelbare Trägerbefestigung am Reflektor vorteilhaft. Eine Stromzuführung zum Träger kann über Federkontakte sichergestellt sein, die bevorzugt durch die Wand des Leuchtengehäuses geführte Schrauben für Stromzuführung kontaktieren.

Bevorzugt ist der Chip in den Reflektor der Fahrrad-Rückleuchte eingesetzt, der auf standardisierte Glühlampen-Konstruktionen abgestimmt ist. Dabei können LED-Halbleiterchips Fenstern eines Standard-Reflektors zugeordnet sein, die eine Rücklicht-Erkennung von der Seite oder von oben der im übrigen vom Reflektor seitlich abgedeckten Lichtquelle ermöglicht.

Weitere Einzelheiten und Vorteile des Gegenstandes der Erfindung ergeben sich aus der nachfolgenden Beschreibung der zugehörigen Zeichnungen, die bevorzugte Ausgestaltungen zeigen. In den Zeichnungen zeigen:
- Fig. 1: Lampensockel mit Träger und Chips (Lampe) für erfindungsgemäße Leuchte in Seitenansicht;
- Fig. 2: dieselbe Lampe von einer anderen Seite;
- Fig. 3: dieselbe Lampe in Vorderansicht;
- Fig. 4: dieselbe Lampe in einen Reflektor eingesetzt in verkleinerter Vorderansicht;
- Fig. 5: dieselbe Lampe in einer Fahrrad-Rückleuchte in einem Teilschnitt;
- Fig. 6: herkömmliche Glühbirne in Seitenansicht;
- Fig. 7: dieselbe Glühbirne in Vorderansicht;
- Fig. 8: Träger einer anderen Lampe mit LED-Mikrochip in der Vorderansicht;
- Fig. 9: derselbe Träger in einer Teilansicht von einer Seite;
- Fig. 10: derselbe Träger in einer Teilansicht von der anderen Seite;
- Fig. 11: Lampe mit demselben Träger in einen Reflektor eingesetzt in verkleinerter Vorderansicht.
- Fig. 12: ein anderer Träger mit Chips in einer Fahrrad-Rückleuchte in einem Querschnitt;
- Fig. 13: dieselbe Fahrrad-Rückleuchte in einem Längsschnitt;
- Fig. 14: vergrößerte Ansicht des Zwischenträgers mit LED-Chips derselben Fahrrad-Rückleuchte.

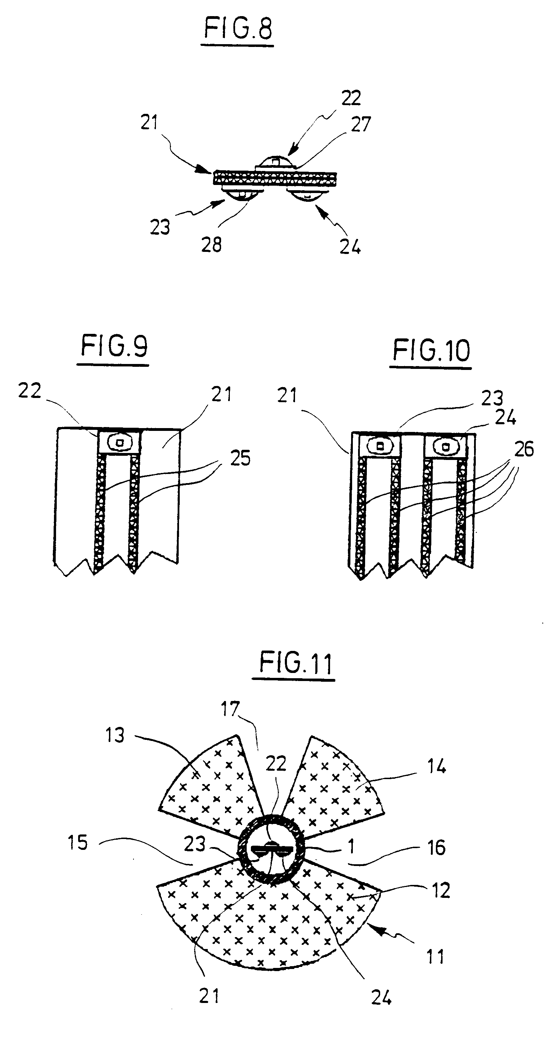

Eine herkömmliche Glühlampe gemäß Fig. 6 und 7 hat einen Lampensockel 1 für Bajonetteinsatz, an dem ein Glaskolben 2 befestigt ist. Im Inneren des Glaskolbens 2 halten Elektroden 3, 4 eine Glühwendel 5. Die Elektroden 3, 4 sind an den Mantel des Lampensockels 1 und an einen Bodenkontakt 6 geführt.

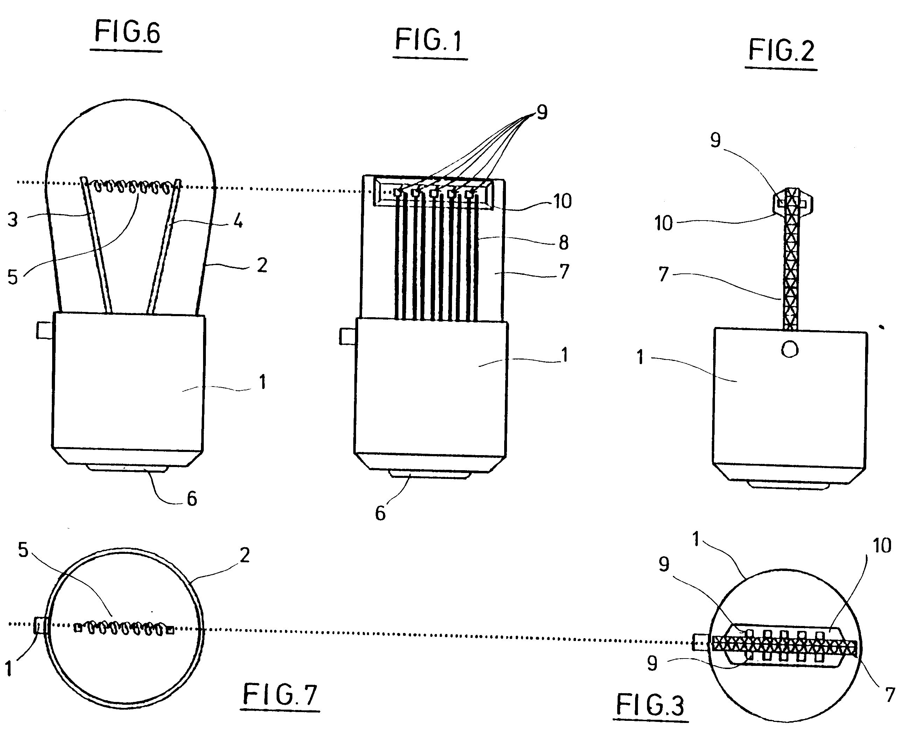

Neben Fig. 6 und 7 ist zum Vergleich eine erfindungsgemäße Lampe in den Fig. 1 und 3 gezeigt. Sie hat ebenfalls einen Bajonett-Sockel 1 mit einem Bodenkontakt 6. Statt der Elektroden 3, 4 ist jedoch eine Leiterplatte 7 als Träger im Lampensockel 1 befestigt. Die Leiterplatte 7 trägt beidseitig Leiterbahnen 8, die beispielsweise aufkaschiert sind. Bei der Leiterplatte kann es sich um eine herkömmliche Platine, aber auch um eine Glasplatte mit aufgedampften Metallspuren als Leiterbahnen handeln.

Am sockelfernen Ende ist die Leiterplatte 7 beidseitig mit LED-Halbleiterchips 9 bestückt, die an die Leiterbahnen gebondet sind. Die beidseitige Bestückung der Leiterplatte 7 mit Chips 9 ist aus Fig. 2 und 3 ersichtlich. Die Chips 9 sind von einer transparenten Kunststoff-Vergußmasse 10 abgedeckt.

Über die Leiterbahnen 8 ist jeder LED-Halbleiterchip 9 im Sockel 1 über Widerstände oder integrierte Schaltungen mit dessen Wandung bzw. Bodenkontakt 6 verbunden. Natürlich können die Halbleiterchips auch insgesamt oder teilweise hineinandergeschaltet sein, um die Lampe für eine bestimmte Versorgungsspannung auszulegen. Die LED-Halbleiterchips werden auch als Mikro-LED's bezeichnet und sind von der Firma Optolab, Norderstedt, erhältlich.

Der Vergleich der Fig. 6 mit den Fig. 1, 2 sowie der Fig. 7 mit der Fig. 3 zeigt, daß die erfindungsgemäße Lampe die herkömmliche in den funktionswesentlichen Elementen nachbildet. Da die Lampensockel 1 übereinstimmen, kann eine herkömmliche Lampe einfach durch eine erfindungsgemäße ausgetauscht werden. Da die Anordnung der Leuchtelemente 5, 9 und deren Geometrie einander angenähert sind, können die auf herkömmliche Glühlampen abgestimmten optischen Systeme änderungslos übernommen werden.

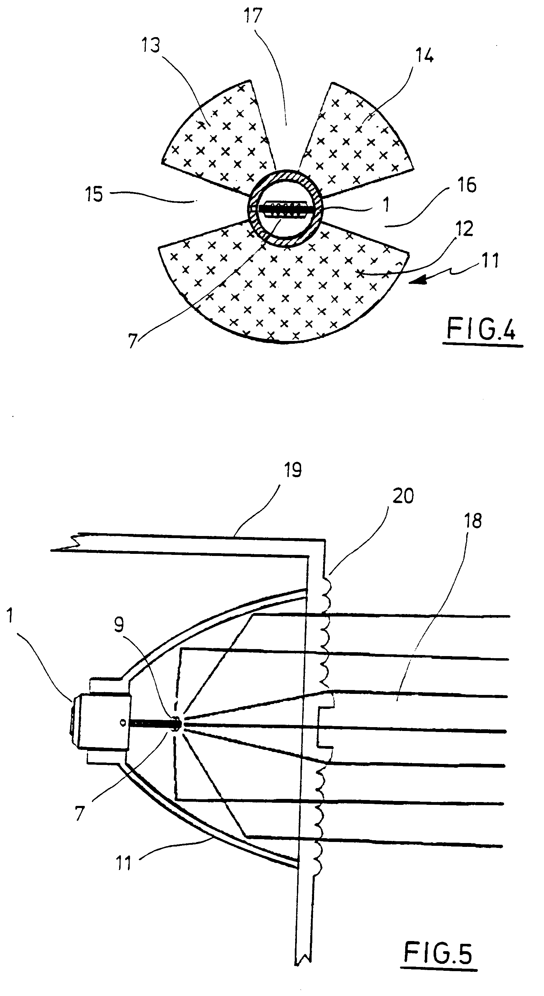

Dies zeigen insbesondere die Fig. 4 und 5 betreffend den Einsatz einer erfindungsgemäßen Lampe in eine FahrradRückleuchte. Gemäß Fig. 4 hat ein standardisierter Reflektor 11 einer solchen Leuchte ein größeres unteres Parabolspiegelsegment 12 und zwei kleinere obere Parabolspiegelsegmente 13, 14. Dazwischen befinden sich Sichtöffnungen 15, 16 für seitliche Beleuchtung in Fahrtrichtung links und rechts und eine obere Kontrollöffnung 17, die dem Fahrradfahrer eine Rücklichtkontrolle in Fahrt ermöglicht.

Da die Halbleiter-Chips auf dem Träger 7 am Sockel 1 der eingesetzten erfindungsgemäßen Lampe eine herkömmliche Glühwendel ersetzen, ist die Lampe durch die Sicht- und Kontrollöffnungen 15, 16, 17 sichtbar.

Fig. 5 zeigt, daß die erfindungsgemäße Lampe auch entlang der Rücklicht-Mittelachse einen Lichtstrahlverlauf 18 wie eine herkömmliche Glühlampe hat. Die LED-Halbleiterchips 9 befinden sich im Brennpunkt des Parabol-Reflektors 11 und strahlen ein paralleles Lichtbündel durch eine rot-transparente Kappe 19 des Rücklichtes ab. Die Kappe ist mit Linsenelementen 20 zur Erzeugung einer vorschriftsmäßigen Abstrahlcharakteristik gemäß StVZO versehen.

Gemäß Fig. 8 bis 9 kann bei einer alternativen Lampe nach der Erfindung eine Leiterplatte 21 auf der einen Seite mit nur einem LED-Halbleiterchip 22 und auf der anderen Seite mit zwei LED-Halbleiterchips 23, 24 bestückt sein. Zur Energieversorgung sind entsprechend auf der einen Leiterbahn-Seite zwei Leiterbahnen 25 und auf der anderen Seite vier Leiterbahnen 26 vorgesenen. Diese LED-Halbleiterchips 22, 23, 24 sind auf Zwischenträger 27 gebondet, welche auf die Leiterplatte 21 gelötet sind. Auf den Zwischenträgern 27 sind die LED-Chips 22, 23, 24 jeweils mit transparenter Kunststoff-Vergußmasse 28 abgedeckt.

Gemäß Fig. 11 ist die Seite des Trägers 21 dieser Lampe mit dem nur einen Chip 22 auf die Seite eines Reflektors 11 oben beschriebener Art mit den Sicht- und Kontrollöffnungen 15, 16, 17 ausgerichtet. Auf dieser Seite wird weniger Licht benötigt. Die andere Seite des Trägers mit den beiden LED-Halbleiterchips 23, 24 ist auf das untere Parabolspiegelsegment 12 gerichtet, wo mehr Licht für die Rückstrahlung benötigt wird.

Gemäß Fig. 12 und 13 hat eine Fahrrad-Rückleuchte ein Leuchtengehäuse 29, welches ein Kunststoffunterteil 30 und ein transparentes, rotes Kappenteil 31 aufweist. Am Kappenteil 31 ist ein oberes Segment eines Reflektors 32 befestigt. Ein unteres Segment des Reflektors 32 ist über eine Nietverbindung 33 mit einer Leiterplatte 34 verbunden, die parallel zur Vorderseite bzw. Rückseite des Lampengehäuses 29 ausgerichtet ist.

Die Leiterplatte 34 trägt etwa im Brennpunkt des Reflektors 32 auf einem Zwischenträger 35 aus Keramik mehrere LED-Halbleiterchips 36, die dem Kappenteil 31 zugewandt sind. Fig. 14 zeigt den Zwischenträger 35 mit den darauf in Glühwendel-Positionen befestigten LED-Chips 36. Der Zwischenträger 35 hat auf einem Keramiksubstrat metallisierte Flächen 37, die zu Lötkontakten 38 im Randbereich geführt sind. Die LED-Chips 36 sind über Bonddrähte 39 an den Metallisierungen 37 kontaktiert. Ein transparenter Verguß 40 deckt die LED-Chips ab.

Wie wiederum aus den Fig. 12 und 13 ersichtlich ist, ist der Zwischenträger 35 an einem oberseitigen Vorsprung 41 der im übrigen rechteckigen Leiterplatte 34 befestigt. Zudem trägt die Leiterplatte 34 ein Steuer-IC 42 sowie einen Energiespeicher 43 für Standlicht und eine Reihe passiver Bauelemente 44.

Die Leiterplatte 34 ist rückseitig an einem Vorsprung 45 des Kunststoffunterteiles 30 abgestützt. Vorderseitig ist sie an einem Steg 46 des Kappenteiles 31 fixiert. Folglich ist der Reflektor 32 mit der Leiterplatte 34 durch Lösen des Kappenteiles 31 vom Kunststoffunterteil 30 abnehmbar.

Die Stromzuführung zur Leiterplatte erfolgt über Federkontakte 47, die an der Rückseite der Leiterplatte 34 fixiert sind. Die Federkontakte kontaktieren Schrauben 48, die durch die Wand des Leuchtengehäuses 29 geführt sind. Zumindest eine der Schrauben 48 kann zugleich der Leuchtenbefestigung in einem Fahrrad-Spritzschutz dienen.

## Patentansprüche

1. Fahrrad-Rückleuchte, mit einem Leuchtengehäuse (19, 29), einem darin angeordneten Reflektor (11, 32) und einer dem Reflektor zugeordneten Lampe, dadurch gekennzeichnet, daß die Lampe mindestens einen LED-Halbleiterchip (9, 36) als Leuchtelement und einen Träger (7, 34) für den LED-Halbleiterchip aufweist und der Träger im Leuchtengehäuse (9, 29) mit etwa im Brennpunkt des Reflektors (11, 32) angeordnetem LED-Halbleiterchip befestigt ist.

2. Rückleuchte nach Anspruch 1, dadurch gekennzeichnet, daß der Träger eine Leiterplatte (7, 34) mit Leiterbahnen (8) für eine Stromversorgung des LED-Halbleiterchips (9, 36) ist.

3. Rückleuchte nach Anspruch 1 oder 2, dadurch gekennzeichnet, daß der LED-Halbleiterchip (22, 23, 24, 36) an einem Zwischenträger (27, 35) befestigt ist.

4. Rückleuchte nach Anspruch 3, dadurch gekennzeichnet, daß der Zwischenträger (27, 35) an die Leiterbahnen (25, 26) des Trägers (21, 34) gelötet ist.

5. Rückleuchte nach einem der Ansprüche 1 bis 4, dadurch gekennzeichnet, daß der LED-Halbleiterchip (22, 23, 24, 36) an die Leiterbahnen (25, 26) oder den Zwischenträger (27, 35) gebondet ist.

6. Rückleuchte nach einem der Ansprüche 1 bis 5, dadurch gekennzeichnet, daß der LED-Halbleiterchip (9, 36) von einem transparenten Schutzverguß (10, 40) bedeckt ist.

7. Rückleuchte nach einem der Ansprüche 1 bis 6, dadurch gekennzeichnet, daß mehrere LED-Halbleiterchips (9, 36) Positionen eines gewendelten Leuchtdrahtes (5) besetzen.

8. Rückleuchte nach einem der Ansprüche 1 bis 7, dadurch gekennzeichnet, daß mehrere LED-Halbleiterchips (9) an verschiedenen Seiten der Leiterplatte (7) angeordnet sind.

9. Rückleuchte nach Anspruch 7 und 8, dadurch gekennzeichnet, daß mehrere LED-Halbleiterchips (9, 36) über die Länge einer Wendel (5) verteilte Positionen besetzen.

10. Rückleuchte nach Anspruch 7, 8 und gegebenenfalls 9, dadurch gekennzeichnet, daß benachbarte LED-Halbleiterchips (9) an verschiedenen Seiten der Leiterplatte (7) um die halbe Länge einer Wendel (5) voneinander beabstandete Positionen besetzen.

11. Rückleuchte nach einem der Ansprüche 1 bis 10, dadurch gekennzeichnet, daß die Lampe einen elektrische Kontakte aufweisenden Lampensockel (1) aufweist, der Träger (7) im Lampensockel befestigt ist und über diesen vorsteht, der LED-Halbleiterchip daran außerhalb des Sockels befestigt ist und am Träger befestigte Leitungen (8) zu den Kontakten (1, 6) des Lampensockels geführt sind.

12. Rückleuchte nach Anspruch 11 mit einem am Lampensockel (1) befestigten Glaskolben, dadurch gekennzeichnet, daß das Leuchtelement (9) im Glaskolben angeordnet ist.

13. Rückleuchte nach Anspruch 11 oder 12, dadurch gekennzeichnet, daß der LED-Halbleiterchip (9) im Ort des Leuchtdrahtes (5) einer standardisierten Glühlampe mit übereinstimmendem Lampensockel (1) angeordnet ist.

14. Rückleuchte nach einem der Ansprüche 11 bis 13, dadurch gekennzeichnet, daß der Lampensockel (1) ein Bajonettsockel ist.

15. Rückleuchte nach einem der Ansprüche 11 bis 14, dadurch gekennzeichnet, daß sich Schaltungselemente wie Widerstand und/oder integrierte Schaltkreise im Lampensockel (1) befinden.

16. Rückleuchte nach einem der Ansprüche 1 bis 10, dadurch gekennzeichnet, daß der Träger (34) unmittelbar im Lampengehäuse (29) befestigt ist.

17. Rückleuchte nach Anspruch 16, dadurch gekennzeichnet, daß der Träger (34) am Reflektor (32) befestigt ist.

18. Rückleuchte nach Anspruch 16 oder 17, dadurch gekennzeichnet, daß die Leiterplatte (34) als Träger Federkontakte (47) für Stromzuführung aufweist.

19. Rückleuchte nach Anspruch 18, dadurch gekennzeichnet, daß die Federkontakte (47) durch die Wand des Leuchtengehäuses (29) geführte Schrauben (48) für Stromzuführung kontaktieren.

20. Rückleuchte nach einem der Ansprüche 1 bis 19, dadurch gekennzeichnet, daß LED-Halbleiterchips (9, 36) seitlich Sicht- und/oder oberem Kontrollfenster (15, 16, 17) eines Standard-Reflektors (11, 32) zugeordnet sind.
